# EUROPÄISCHE PATENTSCHRIFT

(11) **EP 3 028 372 B1**
(45) Veröffentlichungstag und Bekanntmachung des Hinweises auf die Patenterteilung: **09.03.2022**
(21) Anmeldenummer: 14753009.1
(22) Anmeldetag: 10.07.2014
(51) Int. Cl.: H02K 11/21, F16B 19/00, H02K 5/04, F16B 5/06

(54) **ELEKTROMOTOR MIT ROTORWELLE UND GEHÄUSETEIL**
ELECTRIC MOTOR HAVING A ROTOR SHAFT AND A HOUSING PART
MOTEUR ÉLECTRIQUE ÉQUIPÉ D'UN ARBRE DE ROTOR ET D'UNE PARTIE BOÎTIER

(30) Priorität: 02.08.2013 DE 102013012850
(43) Veröffentlichungstag der Anmeldung: 08.06.2016
(73) Patentinhaber: SEW-EURODRIVE GmbH & Co. KG, 76646 Bruchsal (DE)
(72) Erfinder: KNAUS, Thomas, 76698 Zeutern (DE); DREXLER, Mario, 76698 Ubstadt-Weiher (DE)
(86) Internationale Anmeldenummer: PCT/EP2014/001898
(87) Internationale Veröffentlichungsnummer: WO 2015/014443

(56) Entgegenhaltungen:
- EP-A1- 2 113 989
- DE-A1-102008 059 092
- DE-U1- 29 920 785
- DE-U1- 29 920 785
- FR-A- 1 531 027

## Beschreibung

Die Erfindung betrifft einen Elektromotor mit Rotorwelle und einem Gehäuseteil.

Es ist allgemein bekannt, dass ein Elektromotor eine Rotorwelle und ein Gehäuseteil aufweist.

Aus der DE 299 20 785 U1 ist als nächstliegender Stand der Technik eine Anordnung zur Drehmomentabstützung eines Drehgebers bekannt.

Aus der DE 199 56 959 A1 ist ebenfalls eine Anordnung zur Drehmomentabstützung eines Drehgebers bekannt.

Aus der EP 2 113 989 A1 ist eine Drehmomentstütze zur Befestigung des Gehäuses eines Drehgebers an einem Elektromotor bekannt.

Aus der DE 10 2008 059 092 A1 ist ein Elektromotor bekannt.

Der Erfindung liegt daher die Aufgabe zugrunde, einen Elektromotor weiterzubilden, wobei die Herstellung einfach und kostengünstig sein soll.

Erfindungsgemäß wird die Aufgabe bei dem Elektromotor mit Rotorwelle und einem Gehäuseteil nach den in Anspruch 1 angegebenen Merkmalen gelöst.

Wichtige Merkmale der Erfindung bei dem Elektromotor mit Rotorwelle und Gehäuseteil sind, dass die Rotorwelle drehbar gelagert ist im Gehäuseteil,
wobei eine Haube, insbesondere Lüfterhaube, mit dem Gehäuseteil verbunden ist, insbesondere lösbar verbunden,
wobei ein Winkelsensor ein drehbar gelagertes Teil, insbesondere Geberwelle, aufweist, welches gelagert ist in einem Gehäuseteil des Winkelsensors,
wobei das Gehäuseteil mittels einer Drehmomentstütze mit der Haube verbunden ist,
wobei die Haube Gitteröffnungen aufweist,
wobei als Drehmomentstütze ein mit dem Gehäuseteil des Winkelsensors verbundenes, insbesondere lösbar verbundenes und/oder schraubverbundenes, Stützteil mittels eines Verbindungselements mit der Haube verbunden ist,
wobei das Verbindungselement mit einem ersten Abschnitt des Verbindungselements in eine Gitteröffnung eingesteckt ist und mit einem zweiten Abschnitt mit dem Stützteil verbunden ist. Von Vorteil ist dabei, dass die Drehmomentstütze ein Verbindungselement umfasst, welches zwischen Stützteil und Lüfterhaube angeordnet ist und somit ein Abdämpfen von Vibrationen und mechanischen Schwingungen ermöglicht.

Erfindungsgemäß ist das Verbindungselement mit dem Stützteil klipsverbunden. Von Vorteil ist dabei, dass das Verbindungselement bei der Herstellung in einem ersten Schritt mit dem Stützteil verbindbar ist und danach die Lüfterhaube auf den axialen Endbereich des Motors aufschiebbar ist, während dabei das Stützteil elastisch auslenkbar ist und das Verbindungselement in eine Gitteröffnung einschiebbar ist. Dabei sind auch Laschenabschnitte des Stützteils in weitere Gitteröffnungen einschiebbar. So dass bei Versagen des Verbindungselements das Stützteil in Umfangsrichtung direkt abgestützt ist am Lüftergitter der Lüfterhaube.

Erfindungsgemäß weist der zweite Abschnitt eine ringförmige Vertiefung auf, in welche das Stützteil eingerastet gehalten ist. Von Vorteil ist dabei, dass das Stützteil ein rundes Loch aufweisen muss, dessen Durchmesser gleich oder etwas größer sein muss als der minimale Durchmesser der ringförmigen Vertiefung. Der Durchmesser des Lochs ist kleiner als der größte Außendurchmesser des zur ringförmigen Vertiefung benachbarten Abschnitts. Auf diese Weise ist ein Einklipsen ermöglicht. Dabei wirkt der benachbarte Bereich, insbesondere eine Verdickung, einer Rastnase entsprechend. Er verformt sich also beim Vorbeischieben des Stützteils. Das Loch ist beispielsweise durch Ausstanzen herstellbar.

Erfindungsgemäß ist der zweite Abschnitt ein zu einem axialen Endbereich hin sich verjüngender Abschnitt, der an seinem nach axial innen gerichteten Endbereich eine ringförmige Vertiefung aufweist, in welcher das Stützteil eingerastet gehalten ist. Von Vorteil ist dabei, dass ein einfaches Einfädeln ermöglicht ist.

Bei einer vorteilhaften Ausgestaltung weist das Verbindungselement einen Begrenzungsabschnitt auf, der einen größeren Außendurchmesser aufweist als die ringförmige Vertiefung und/oder als der erste und/oder zweite Abschnitt, wobei der Begrenzungsabschnitt zwischen Stützteil und Haube angeordnet ist. Von Vorteil ist dabei, dass der Begrenzungsabschnitt am Lüftergitter anliegt und ein weiteres Durchführen des Verbindungselements durch eine Gitteröffnung verhinderbar ist. Der Begrenzungsabschnitt umfasst den größten Außendurchmesser des Verbindungselements. Bei einer vorteilhaften Ausgestaltung ist das Stützteil und/oder die Haube aus einem weniger elastisch verformbaren Material ausgeführt als das Verbindungselement, insbesondere wobei Stützteil und/oder Haube aus Metall gefertigt sind und das Verbindungselement aus Gummi oder Kunststoff, insbesondere aus NBR oder EPDM. Von Vorteil ist dabei, dass ein Abdämpfen der mechanischen Schwingungen einfach ermöglicht ist. Die Dissipation im Material des Verbindungselements ist größer als im Stützteil und in der Lüfterhaube.

Bei einer vorteilhaften Ausgestaltung weist der Begrenzungsabschnitt und/oder der erste Abschnitt einen vieleckigen, insbesondere dreieckigen, viereckigen oder sechseckigen, insbesondere regelmäßig vieleckigen, insbesondere quadratischen, Querschnitt mit gerundeten Ecken auf und/oder
der Begrenzungsabschnitt und/oder der erste Abschnitt weist einen polygonalen, insbesondere regelmäßig polygonalen Querschnitt mit gerundeten Ecken auf, insbesondere wobei die Normalenrichtung der Schnittebene parallel zur axialen Richtung und/oder Richtung der Ringachse ausgerichtet ist. Von Vorteil ist dabei, dass die Gitteröffnungen entsprechend polygonal ausführbar sind. Somit ist eine einfache Herstellung ermöglicht und ein relativ geringer Widerstand der zum Lüfter hinströmenden Luft entgegensetzbar. Alternativ sind aber auch kreisförmige Gitteröffnungen ausführbar, wobei dann das Verbindungselement statt der polygonalen Abschnitte kreisförmige Abschnitte, insbesondere erster, zweiter Abschnitt und Begrenzungsabschnitt, aufweist Bei einer vorteilhaften Ausgestaltung weist der zweite Abschnitt einen kreisförmigen Querschnitt auf, insbesondere wobei die Normalenrichtung der Schnittebene parallel zur axialen Richtung und/oder Richtung der Ringachse ausgerichtet ist. Von Vorteil ist dabei, dass im Stützteil nur ein einfaches kreisrundes Loch auszustanzen ist, in welches der zweite Abschnitt einführbar ist.

Erfindungsgemäß weist das Stützteil einen oder mehrere Laschenabschnitte auf, wobei der jeweilige Laschenabschnitt in eine jeweilige Gitteröffnung eingreift. Von Vorteil ist dabei, dass eine erhöhte Sicherheit realisiert ist. Denn wenn das Verbindungselement versagt, greifen die Laschenabschnitte in Gitteröffnungen ein und übertragen das Drehmoment.

Bei einer vorteilhaften Ausgestaltung ist die Gitteröffnung jeweils polygonal, insbesondere regelmäßig polygonal, insbesondere quadratisch, regelmäßig sechseckig oder regelmäßig dreieckig, ausgeführt, insbesondere mit gerundeten Ecken. Von Vorteil ist dabei, dass eine einfache Herstellung ermöglicht ist und ein niedriger Strömungswiderstand.

Bei einer vorteilhaften Ausgestaltung grenzt in Ringachsrichtung der erste Abschnitt des Verbindungselements an den Begrenzungsabschnitt, an welchen die ringförmige Vertiefung angrenzt,
wobei die ringförmige Vertiefung zwischen dem zweiten Abschnitt und dem Begrenzungsabschnitt angeordnet ist. Von Vorteil ist dabei, dass ein Anliegen des Verbindungselements an dem Lüftergitter sicher gewährleistbar ist.

Bei einer vorteilhaften Ausgestaltung weist der erste Abschnitt in Ringachsrichtung einen insbesondere nach außen, also zu einem in Ringachsrichtung äußeren Endbereich, hin sich verjüngenden Querschnitt und/oder Außendurchmesser auf und/oder der zweite Abschnitt weist entgegen der Ringachsrichtung einen nach außen, also zu einem entgegen der Ringachsrichtung äußeren Endbereich, hin sich verjüngenden Querschnitt und/oder Außendurchmesser auf. Von Vorteil ist dabei, dass ein einfaches Einfädeln ermöglicht ist. Bei einer vorteilhaften Ausgestaltung ist der zweite Abschnitt ein Rotationskörperabschnitt, insbesondere ein konischer Abschnitt. Von Vorteil ist dabei, dass eine einfache Herstellung ermöglicht ist.

Erfindungsgemäß weist das Stützteil weitere Laschenabschnitte auf, welche eine mittig im Gitter der Haube angeordnete Ausnehmung abdecken, insbesondere wobei die Ausnehmung größer ist als jede sonstige Gitteröffnung. Von Vorteil ist dabei, dass die Sicherheit erhöht ist, da bei Versagen des Verbindungselements die Drehmomentstützfunktion gewährleistbar ist. Außerdem wird mittels des Gitters ein Berühren drehender Teile verhindert. Denn die Gitteröffnungen weisen einen kleineren Durchmesser auf als der menschliche Finger.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

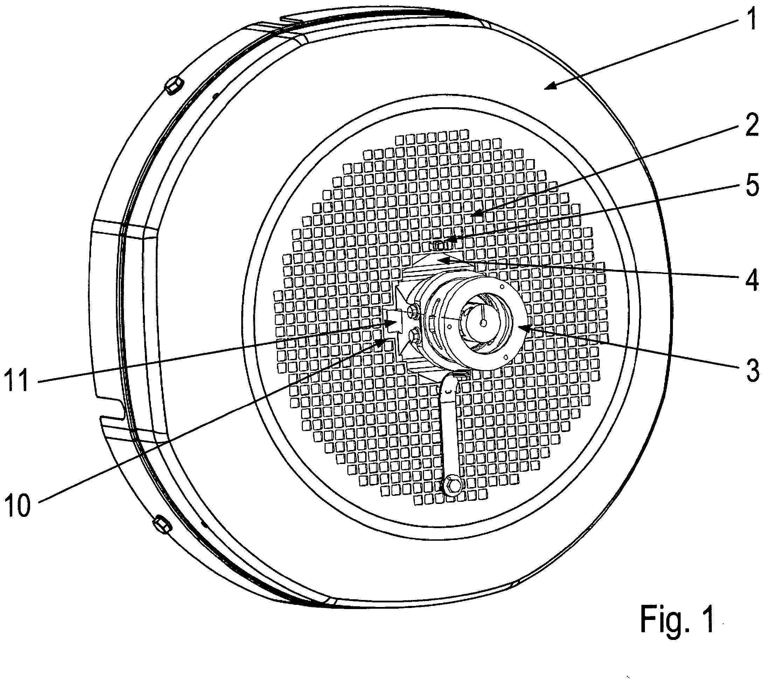

In der Figur 1 ist eine Draufsicht auf einen axialen Endbereich eines erfindungsgemäßen Motors gezeigt, der eine an einer Lüfterhaube 1 abgestützte Drehmomentstütze für einen Winkelsensor aufweist.

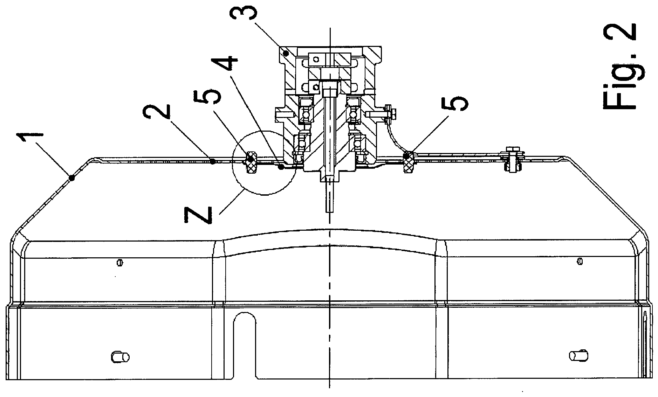

In der Figur 2 ist ein Querschnitt durch den Bereich der an der Lüfterhaube 1 abgestützten Drehmomentstütze für einen Winkelsensor gezeigt.

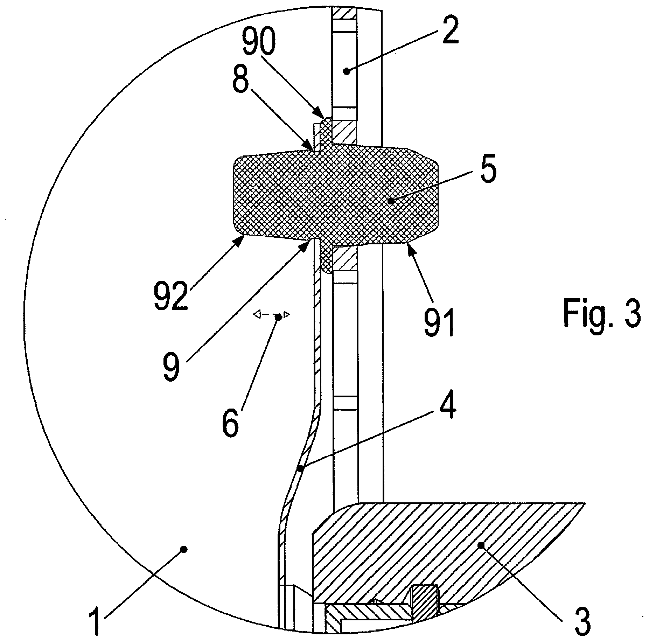

In der Figur 3 ist ein Querschnitt durch den Verbindungsbereich zwischen Lüfterhaube 1 und Verbindungselement 5.

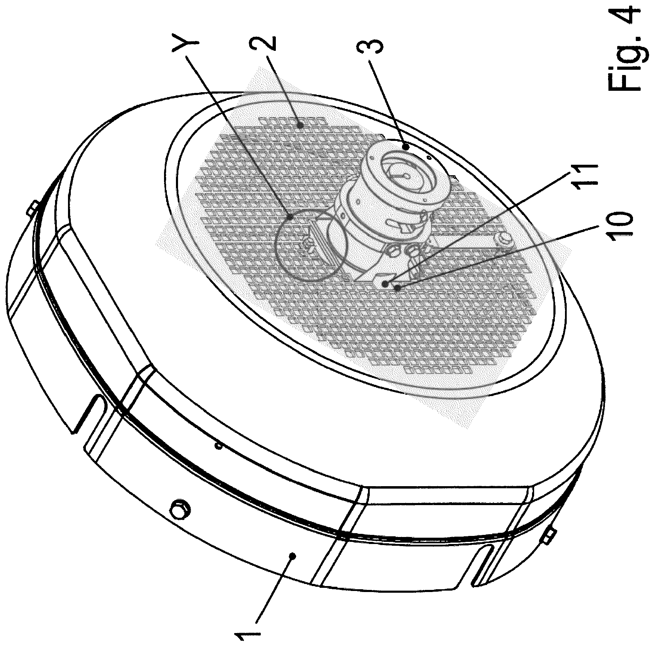

In der Figur 4 ist eine Schrägansicht auf die Lüfterhaube 1 gezeigt.

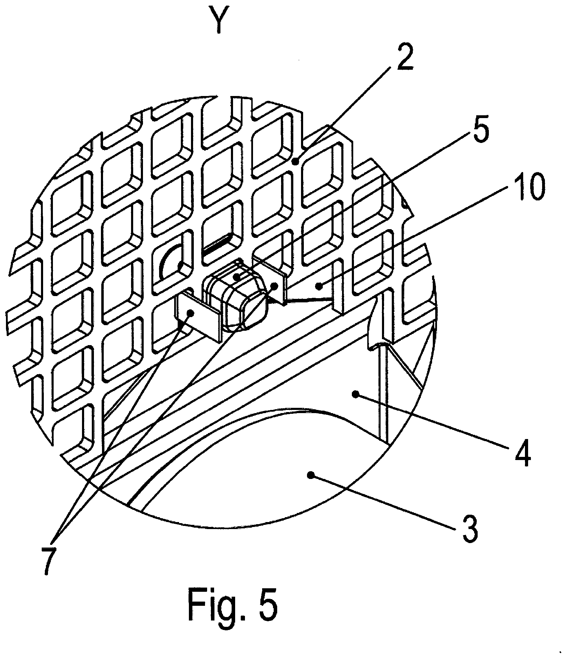

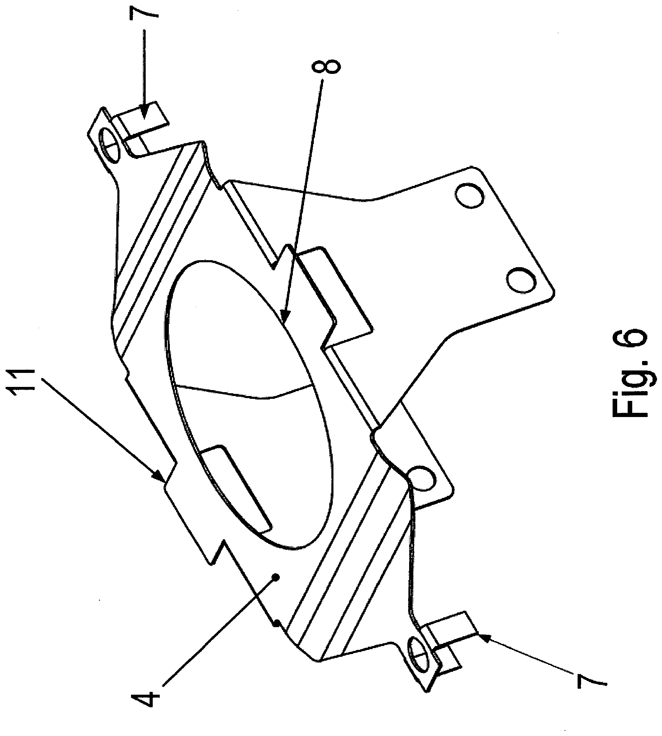

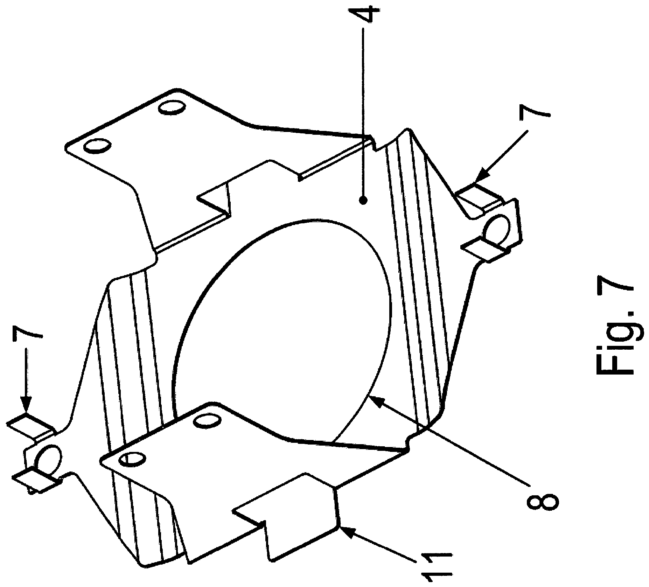

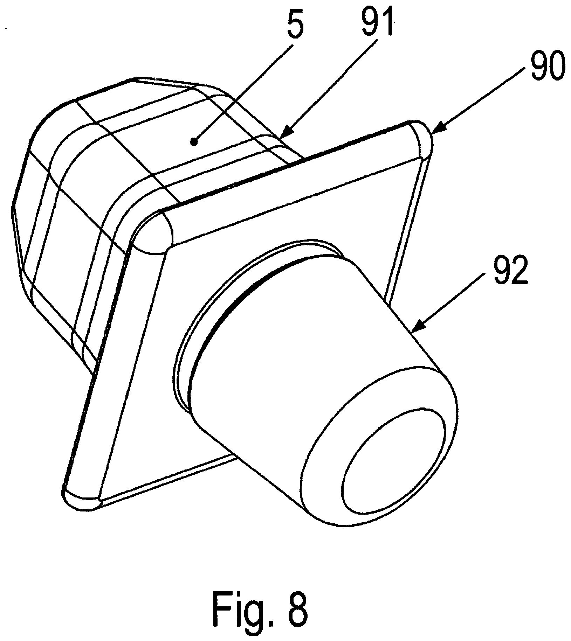

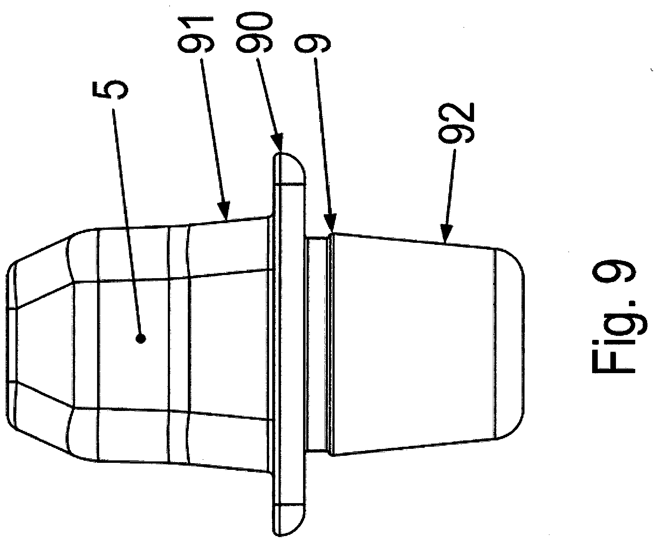

In der Figur 5 ist ein vergrößerter Ausschnitt aus Figur 4 gezeigt.

Wie in den Figuren dargestellt, ist eine Lüfterhaube 1 axial aufgeschoben auf den axialen Endbereich eines Motors.

Der Winkelsensor weist einen drehbar gelagerten Teil auf, der drehfest mit dem Rotor des Elektromotors verbunden ist. Der drehbar gelagerte Teil des Winkelsensors ist gelagert in einem Gehäuseteil 3 des Winkelsensors, welches über die Drehmomentstütze in Umfangsrichtung abgestützt ist an der Lüfterhaube 1.

Die Drehmomentstütze weist ein Stützteil 4 auf, welches mit dem Gehäuseteil 3 drehfest, insbesondere schraubverbunden, verbunden ist.

Das Stützteil 4 ist vorzugsweise ein Blechteil und/oder ein Stanz-Biegeteil. Das Stützteil 4 weist eine in axialer Richtung, also in Richtung der Rotorachse durchgehende Ausnehmung auf, durch welche ein Abschnitt 92 des Verbindungselements 5 hindurchgeführt ist und in einer ringförmigen Vertiefung eingeklipst verbunden ist mit dem Stützteil 4. Der Abschnitt 92 ist zum äußeren Ende des Verbindungselements 5 hin verjüngend ausgeführt, also mit monoton und/oder stetig abnehmendem Durchmesser. Am inneren Ende des Abschnitts 92 ist eine Verdickung angeordnet, die zwischen der ringförmigen Vertiefung und der Verdickung, also ringförmigen Verdickung und/oder Wulst, und einem ebenfalls umlaufend ausgeformten Begrenzungsabschnitt 90 angeordnet ist. Der Begrenzungsabschnitt weist einen großen Durchmesser auf, insbesondere den größten Außendurchmesser des Verbindungselements 5. Auf der von dem Abschnitt 92 abgewandten Seite des Verbindungselements ist ein ebenfalls nach außen verjüngter Abschnitt 91 angeordnet, der in eine Gitteröffnung des Lüftergitters 2 der Lüfterhaube 1 eingesteckt ist.

Somit ist das Stützteil 4 mittels des Begrenzungsabschnitts 90 vom Lüftergitter 2 der Lüfterhaube 1 beabstandet.

Das Stützteil 4 ist derart geformt, dass beim Aufsetzen der Lüfterhaube 1 die durchgehende Ausnehmung des Stützteils 4, welche klipsverbunden ist mit dem Verbindungselements 5, elastisch um die Auslenkung 6 ausgelenkt wird und somit unter Vorspannung verbunden wird mit der Lüfterhaube 1.

In Rotorwellenenachsrichtung nimmt also der größte Außendurchmesser des Verbindungselements 5 zu. Dieser Abschnitt ist auch als Einführabschnitt 92 bezeichenbar, weil er das Einfädeln in die durchgehende Ausnehmung des Lüftergitters 2 der Lüfterhaube 1 erleichtert.

Axial schließt sich die ringförmige Verdickung an, an welche axial wiederum die ringförmige Vertiefung, welche einen kleineren Durchmesser aufweist, angeschlossen ist. Darauf folgt der radial weiter ausgedehnte ringförmige Begrenzungsabschnitt 90. Dieser wird axial gefolgt von dem Abschnitt 91, dessen maximaler Außendurchmesser mit zunehmender Entfernung vom Begrenzungsabschnitt 90 abnimmt. Somit ist ein Einfädeln in eine Gitteröffnung des Lüftergitters 2 einfach ausführbar.

Der Abschnitt 92 ist als Rotationskörperabschnitt ausführbar. Der Abschnitt 91 ist im Querschnitt wie auch der Begrenzungsabschnitt vorzugsweise der Form der Gitteröffnung angepasst, also quadratisch mit abgerundeten Ecken. Somit ist ein Einfädeln in das Lüftergitter einfach ermöglicht und der Begrenzungsabschnitt deckt die Gitteröffnung ab, da er am Umfang die Gitteröffnung in radialer Richtung etwas überragt.

Das Lüftergitter 2 weist ein insbesondere regelmäßiges Gitter von Gitteröffnungen auf, wobei dieses Lüftergitter 2 radial weiter innen angeordnet ist als der Rand der Lüfterhaube 1, welcher das Lüftergitter radial umgibt und trägt.

Radial mittig im Lüftergitter 2 ist eine axial durchgehende Ausnehmung angeordnet, die größer ist als jede der Gitteröffnungen des Lüftergitters 2. In dieser durchgehenden Ausnehmung ist der Winkelsensor angeordnet, insbesondere sein Gehäuseteil 3.

Bei der Herstellung wird also das Verbindungselement 5 eingeklipst in die axial durchgehende Ausnehmung des Stützteils 4, welche vorzugsweise kreisrund ausgeführt ist und somit der Abschnitt 92 einfach einfädelbar ist. Danach wird die Vorspannung durch andrücken der Lüfterhaube erzeugt, wobei gleichzeitig das Verbindungselement mit seinem Abschnitt 91 in eine Gitteröffnung eingefädelt wird, so dass dann der Begrenzungsabschnitt 90 am Lüftergitter 2 anliegt unter Vorspannung.

Somit ist in Umfangsrichtung eine drehfeste Verbindung zwischen Stützteil 4 und Lüftergitter 2 der Lüfterhaube 1 erzeugt, wobei allerdings das Verbindungselement 5 zwischengeordnet ist.

Das Material des Verbindungselements 5 ist elastischer als das Material des Stützteils 4 und des Lüftergitters 2. Somit ist ein Abdämpfen von Schwingungen ermöglicht. Dabei werden sich in Umfangsrichtung und/oder in axialer Richtung ausbreitende Schwingungsmoden abgedämpft. Aber auch in radialer Richtung sich ausbreitende Schwingungsmoden werden abgedämpft, da das Verbindungselement 5 zwischengeordnet ist.

Besonders in axialer Richtung werden Schwingungen abgedämpft, da das Verbindungselement 5 nicht fest verbunden ist mit dem Gitter 2, sondern nur durch Vorspannung anliegt. Es liegt also in axialer Richtung ein Freiheitsgrad vor.

Das Verbindungselement 5 ist vorzugsweise aus Kunststoff oder Gummi hergestellt. Besonders bevorzugt ist NBR oder EPDM. Das Stützteil 4 ist aus Stahlblech hergestellt. Ebenso ist auch die Lüfterhaube 1 aus Stahlblech herstellbar.

Das Stützteil 4 weist auch Laschenabschnitte 7 auf, welche jeweils in eine Gitteröffnung des Lüftergitters 2 eingreifen, die nächstbenachbart ist zu derjenigen Gitteröffnung, in welcher das Verbindungselement 5 eingesteckt ist mit seinem Abschnitt 91. Das Eingreifen der Laschenabschnitte 7 in die Gitteröffnungen erfolgt selbsttätig beim axialen Aufschieben der Lüfterhaube 1 auf den Motor.

Die Laschenabschnitte 7 sind am Grundkörper des Stützteils 4 in axiale Richtung herumgebogen, insbesondere so dass sie einen Biegewinkel von etwa 90° aufweisen.

Außerdem weist das Stützteil 4 am Grundkörper weitere Laschenabschnitte 11 auf, welche die mittig in der Lüfterhaube 1 angeordnete Ausnehmung zumindest teilweise abdecken. Diese weiteren Laschenabschnitte 11 weisen wiederum einen Biegewinkel von etwa 90° zu den Laschenabschnitten 7 auf. Hierdurch wird ein Berührschutz gewährleistet, indem das Berühren innerhalb der Haube angeordneten drehenden Teilen verhindert ist.

Beim Einstecken des Verbindungselements 5 in das Stützteil 4 wird die ringförmige Verdickung elastisch komprimiert und danach rastet das Verbindungselement 5 in die ringförmige Vertiefung ein, wobei die ringförmige Verdickung wiederum entspannt wird. Auf diese Weise ist ein sicheres Halten des Verbindungselements 5 in dem Stützteil 4 erreichbar. Der Abschnitt 91 wird in der entsprechenden Gitteröffnung kraftschlüssig gehalten, wobei das Material des Verbindungselements 5 im Bereich der Gitteröffnung etwas komprimiert wird.

Das Verbindungselement 5 liegt am Stützteil 4 und am Lüftergitter 2 der Lüfterhaube 1 spielfrei an.

Die Lüfterhaube 1 deckt einen Lüfter ab, der drehfest mit der Rotorwelle des Elektromotors verbunden ist. Dabei strömt die vom Lüfter angesaugte Luft durch das Lüftergitter 2 der Lüfterhaube 1 zum Lüfter hinein.

Bei einem weiteren erfindungsgemäßen Ausführungsbeispiel sind die Gitteröffnungen rund ausgeführt, insbesondere kreisrund oder ellipsenförmig. Hierbei wird ein geringer Luftströmungswiderstand erzeugt für die zum Lüfter einströmende Luft. Die Herstellung ist ebenfalls einfach. Das Verbindungselement ist dann entsprechend rund ausgeführt, insbesondere kreisrund oder ellipsenförmig.

### Bezugszeichenliste

- 1: Lüfterhaube
- 2: Lüftergitter
- 3: Gehäuseteil
- 4: Stützteil, insbesondere Drehmomentstützteil
- 5: Verbindungselement,
- 6: Auslenkung
- 7: Laschenabschnitt
- 8: Ausnehmung, durchgehend
- 9: Verdickung, insbesondere ringförmige Verdickung und/oder Wulst
- 10: Ausnehmung
- 11: weiterer Laschenabschnitt
- 90: Begrenzungsabschnitt
- 91: Einführabschnitt
- 92: Einführabschnitt

## Patentansprüche

1. Elektromotor mit Rotorwelle und einem Gehäuseteil (3) eines Winkelsensors, wobei die Rotorwelle im Gehäuseteil (3) drehbar gelagert ist,
wobei eine Haube, insbesondere Lüfterhaube (1), mit dem Gehäuseteil (3) verbunden ist, insbesondere lösbar verbunden ist,
wobei der Winkelsensor ein drehbar gelagertes Teil, insbesondere Geberwelle, aufweist, welches in dem Gehäuseteil (3) des Winkelsensors gelagert ist,
wobei das Gehäuseteil (3) mittels einer Drehmomentstütze mit der Haube verbunden ist,
wobei die Haube Gitteröffnungen und eine mittig im Gitter der Haube angeordnete Ausnehmung (10) aufweist, in welcher der Winkelsensor angeordnet ist,
wobei als Drehmomentstütze ein mit dem Gehäuseteil (3) des Winkelsensors drehfest verbundenes Stützteil (4) mittels eines Verbindungselements (5) mit der Haube verbunden ist,
wobei das Verbindungselement (5) mit einem ersten Abschnitt, d.h. einem ersten Einführabschnitt (91), in eine Gitteröffnung eingesteckt ist und mit einem zweiten Abschnitt, d.h. einem zweiten Einführabschnitt (92), mit dem Stützteil (4) verbunden ist,
**dadurch gekennzeichnet, dass** das Verbindungselement (5) mit dem Stützteil (4) dadurch klipsverbunden ist, dass der zweite Einführabschnitt (92) eine ringförmige Vertiefung aufweist, in welche das Stützteil (4) eingerastet gehalten ist, wobei das Stützteil (4) ein rundes Loch aufweist, dessen Durchmesser gleich oder etwas größer ist als der minimale Durchmesser der ringförmigen Vertiefung des zweiten Einführabschnitts (92), wobei der Durchmesser des Lochs kleiner als der größte Außendurchmesser des zur ringförmigen Vertiefung benachbarten Abschnitts (9) des zweiten Einführabschnitts (92) ist,
wobei das Stützteil (4) einen oder mehrere Laschenabschnitte (7) aufweist, wobei der jeweilige Laschenabschnitt (7) in eine jeweilige Gitteröffnung eingreift,
wobei das Stützteil (4) weitere Laschenabschnitte (11) aufweist, welche die mittig im Gitter der Haube angeordnete Ausnehmung (10) abdecken.

2. Elektromotor nach Anspruch 1,
**dadurch gekennzeichnet, dass**
das Verbindungselement (5) einen Begrenzungsabschnitt (90) aufweist, der einen größeren Außendurchmesser aufweist als die ringförmige Vertiefung und als der erste und zweite Einführabschnitt (91, 92),
wobei der Begrenzungsabschnitt (90) zwischen Stützteil (4) und Haube angeordnet ist.

3. Elektromotor nach mindestens einem der vorangegangenen Ansprüche,
**dadurch gekennzeichnet, dass**
das Stützteil (4) und die Haube aus einem weniger elastisch verformbaren Material ausgeführt ist als das Verbindungselement (5),
wobei insbesondere Stützteil (4) und/oder Haube aus Metall gefertigt sind und das Verbindungselement (5) aus Gummi oder Kunststoff, insbesondere aus NBR oder EPDM gefertigt ist.

4. Elektromotor nach mindestens einem der vorangegangenen Ansprüche,
**dadurch gekennzeichnet, dass**
der Begrenzungsabschnitt (90) einen vieleckigen, insbesondere dreieckigen, viereckigen oder sechseckigen, insbesondere regelmäßig vieleckigen, insbesondere quadratischen, Querschnitt mit gerundeten Ecken aufweist
und wobei die Normalenrichtung der Schnittebene parallel zur axialen Richtung ausgerichtet ist.

5. Elektromotor nach mindestens einem der vorangegangenen Ansprüche,
**dadurch gekennzeichnet, dass**
der zweite Abschnitt, d.h. der zweite Einführabschnitt (92), einen kreisförmigen Querschnitt aufweist, wobei die Normalenrichtung der Schnittebene parallel zur axialen Richtung ausgerichtet ist.

6. Elektromotor nach mindestens einem der vorangegangenen Ansprüche,
**dadurch gekennzeichnet, dass**
die Gitteröffnungen jeweils polygonal, insbesondere regelmäßig polygonal, insbesondere quadratisch, regelmäßig sechseckig oder regelmäßig dreieckig, ausgeführt sind, insbesondere mit gerundeten Ecken.

7. Elektromotor nach mindestens einem der vorangegangenen Ansprüche,
**dadurch gekennzeichnet, dass**
in Ringachsrichtung der ringförmigen Vertiefung der erste Abschnitt, d.h. der erste Einführabschnitt (91), des Verbindungselements (5) angrenzt an den Begrenzungsabschnitt (90), an welchen die ringförmige Vertiefung angrenzt,
wobei die ringförmige Vertiefung zwischen dem zweiten Abschnitt, d.h. dem zweiten Einführabschnitt (92), und dem Begrenzungsabschnitt (90) angeordnet ist.

8. Elektromotor nach mindestens einem der vorangegangenen Ansprüche,
**dadurch gekennzeichnet, dass**
der erste Abschnitt, d.h. der erste Einführabschnitt (91), in Ringachsrichtung nach außen hin mit sich verjüngendem Querschnitt oder Außendurchmesser ausgeführt ist,
und dass
der zweite Abschnitt, d.h. der zweite Einführabschnitt (92), in Ringachsrichtung der ringförmigen Vertiefung nach außen hin mit sich verjüngendem Querschnitt oder Außendurchmesser ausgeführt ist.

9. Elektromotor nach mindestens einem der vorangegangenen Ansprüche,
**dadurch gekennzeichnet, dass**
der zweite Abschnitt, d.h. der zweite Einführabschnitt (92), ein Rotationskörperabschnitt ist.

## Claims

1. Electric motor comprising a rotor shaft and a housing part (3) of an angle sensor, the rotor shaft being rotatably mounted in the housing part (3),
a cowl, in particular a fan cowl (1) being connected, in particular releasably connected, to the housing part (3),
the angle sensor comprising a rotatably mounted part, in particular a transmission shaft, which is mounted in the housing part (3) of the angle sensor,
the housing part (3) being connected to the cowl by means of a torque bracket,
the cowl comprising grate openings and a cut-out (10), which is arranged in the middle of the grate of the cowl and in which the angle sensor is arranged,
a supporting part (4), which is connected, in the form of a torque bracket, to the housing part (3) of the angle sensor for conjoint rotation, being connected to the cowl by means of a connecting element (5),
the connecting element (5) being inserted into a grate opening by a first portion, i.e. a first insertion portion (91), and being connected to the supporting part (4) by a second portion, i.e. a second insertion portion (92),
**characterised in that**
the connecting element (5) is clip-connected to the supporting part (4) by the second insertion portion (92) comprising an annular recess in which the supporting part (4) is retained in a latched manner, the supporting part (4) comprising a round hole, the diameter of which is equal to or slightly greater than the minimum diameter of the annular recess in the second insertion portion (92), the diameter of the hole being smaller than the largest external diameter of the portion (9) of the second insertion portion (92) that is adjacent to the annular recess,
the supporting part (4) comprising one or more lug portions (7), each lug portion (7) engaging in a respective grate opening,
the supporting part (4) comprising further lug portions (11), which cover the cut-out (10) arranged in the middle of the grate of the cowl.

2. Electric motor according to claim 1,
**characterised in that**
the connecting element (5) comprises a delimiting portion (90), which has a greater external diameter than the annular recess and than the first and the second insertion portion (91, 92), the delimiting portion (90) being arranged between the supporting part (4) and the cowl.

3. Electric motor according to at least one of the preceding claims,
**characterised in that**
the supporting part (4) and the cowl are made of a material that is less resiliently deformable than the connecting element (5),
the supporting part (4) and/or the cowl in particular being made of metal and the connecting element (5) being made of rubber or plastics material, in particular of NBR or EPDM.

4. Electric motor according to at least one of the preceding claims,
**characterised in that**
the delimiting portion (90) has a polygonal, in particular triangular, quadrangular or hexagonal cross section, in particular a regularly polygonal, in particular a square, cross section having rounded corners
and the normal direction of the sectional plane being oriented in parallel with the axial direction.

5. Electric motor according to at least one of the preceding claims,
**characterised in that**
the second portion, i.e. the second insertion portion (92), has a circular cross section, the normal direction of the sectional plane being oriented in parallel with the axial direction.

6. Electric motor according to at least one of the preceding claims,
**characterised in that**
the grate openings are each configured to be polygonal, in particular regularly polygonal, in particular square, regularly hexagonal or regularly triangular, in particular having rounded corners.

7. Electric motor according to at least one of the preceding claims,
**characterised in that**
in the ring axis direction of the annular recess, the first portion, i.e. the first insertion portion (91), of the connecting element (5) adjoins the delimiting portion (90), which is adjoined by the annular recess,
the annular recess being arranged between the second portion, i.e. the second insertion portion (92), and the delimiting portion (90).

8. Electric motor according to at least one of the preceding claims,
**characterised in that**
the first portion, i.e. the first insertion portion (91), is configured so as to have a tapering cross section or external diameter outwardly in the ring axis direction,
and **in that**
the second portion, i.e. the second insertion portion (92), is configured so as to have a tapering cross section or external diameter outwardly in the ring axis direction of the annular recess.

9. Electric motor according to at least one of the preceding claims,
**characterised in that**
the second portion, i.e. the second insertion portion (92), is a solid of revolution portion.

## Revendications

1. Moteur électrique comportant un arbre de rotor et une partie boîtier (3) d'un capteur d'angle, dans lequel l'arbre de rotor est monté de manière rotative dans la partie boîtier (3),
dans lequel un capot, en particulier un capot de ventilateur (1), est relié, en particulier de manière amovible, à la partie boîtier (3),
dans lequel le capteur d'angle présente une partie montée de manière rotative, en particulier un arbre de codeur, qui est monté dans la partie boîtier (3) du capteur d'angle,
dans lequel la partie boîtier (3) est reliée au capot au moyen d'un support de couple,
dans lequel le capot présente des ouvertures de grille et un évidement (10) disposé au centre de la grille du capot, dans lequel le capteur d'angle est disposé,
dans lequel une pièce d'appui (4) reliée de manière solidaire en rotation à la partie boîtier (3) du capteur d'angle est reliée au capot en tant que support de couple au moyen d'un élément de liaison (5),
dans lequel l'élément de liaison (5) est inséré avec une première portion, c'est-à-dire une première portion d'introduction, dans une ouverture de grille et relié avec une deuxième portion, c'est-à-dire une deuxième portion d'introduction, à la pièce d'appui (4),
**caractérisé en ce que**
l'élément de liaison (5) est relié par clip à la pièce d'appui (4) par le fait que la deuxième portion d'introduction (92) présente un évidement annulaire dans lequel la pièce d'appui (4) est maintenue par encliquetage, dans lequel la pièce d'appui (4) présente un trou rond dont le diamètre est égal ou légèrement supérieur au diamètre minimal de l'évidement annulaire de la deuxième portion d'introduction (92), le diamètre du trou étant inférieur au plus grand diamètre extérieur de la portion (9) de la deuxième portion d'introduction (92) adjacente à l'évidement annulaire,
dans lequel la pièce d'appui (4) présente une ou plusieurs portions formant languette (7), la portion formant languette respective (7) s'engageant dans une ouverture de grille respective,
dans lequel la pièce d'appui (4) présente d'autres portions formant languette (11) qui recouvrent l'évidement (10) disposé de manière centrale dans la grille du capot.

2. Moteur électrique selon la revendication 1,
**caractérisé en ce que**
l'élément de liaison (5) présente une portion de délimitation (90) qui présente un diamètre extérieur plus grand que l'évidement annulaire et que les première et deuxième portions d'introduction (91, 92),
dans lequel la portion de délimitation (90) est disposée entre la pièce d'appui (4) et le capot.

3. Moteur électrique selon au moins l'une des revendications précédentes,
**caractérisé en ce que**
la pièce d'appui (4) et le capot sont réalisés dans un matériau moins déformable élastiquement que l'élément de liaison (5),
dans lequel, en particulier, la pièce d'appui (4) et/ou le capot sont constitués de métal et l'élément de liaison (5) est constitué de caoutchouc ou de matière plastique, en particulier de NBR ou d'EPDM.

4. Moteur électrique selon au moins l'une des revendications précédentes,
**caractérisé en ce que**
la portion de délimitation (90) présente une coupe transversale polygonale, en particulier triangulaire, quadrangulaire ou hexagonale, en particulier régulièrement polygonale, en particulier carrée, avec des angles arrondis,
et dans lequel la direction normale au plan de coupe est orientée parallèlement à la direction axiale.

5. Moteur électrique selon au moins l'une des revendications précédentes,
**caractérisé en ce que**
la deuxième portion, c'est-à-dire la deuxième portion d'introduction (92), présente une coupe transversale circulaire, dans lequel la direction normale au plan de coupe est orientée parallèlement à la direction axiale.

6. Moteur électrique selon au moins l'une des revendications précédentes,
**caractérisé en ce que**
les ouvertures de grille sont chacune réalisées en forme polygonale, en particulier régulièrement polygonale, en particulier carrée, régulièrement hexagonale ou régulièrement triangulaire, en particulier avec des angles arrondis.

7. Moteur électrique selon au moins l'une des revendications précédentes,
**caractérisé en ce que**,
dans la direction de l'axe d'anneau de l'évidement annulaire, la première portion, c'est-à-dire la première portion d'introduction (91), de l'élément de liaison (5) est adjacente à la portion de délimitation (90) à laquelle l'évidement annulaire est adjacent,
dans lequel l'évidement annulaire est disposé entre la deuxième portion, c'est-à-dire la deuxième portion d'introduction (92), et la portion de délimitation (90).

8. Moteur électrique selon au moins l'une des revendications précédentes,
**caractérisé en ce que**
la première portion, c'est-à-dire la première portion d'introduction (91), est réalisée avec une coupe transversale ou un diamètre extérieur allant en diminuant vers l'extérieur dans la direction de l'axe d'anneau,
et que
la deuxième portion, c'est-à-dire la deuxième portion d'introduction (92), est réalisée avec une coupe transversale ou un diamètre extérieur allant en diminuant vers l'extérieur dans la direction de l'axe d'anneau de l'évidement annulaire.

9. Moteur électrique selon au moins l'une des revendications précédentes,
**caractérisé en ce que**
la deuxième portion, c'est-à-dire la deuxième portion d'introduction (92), est une portion formant corps de révolution.
